(19) **Europäisches Patentamt**
**European Patent Office**
**Office européen des brevets**

(11) **EP 3 152 023 B1**

(12) **EUROPEAN PATENT SPECIFICATION**

(45) Date of publication and mention
of the grant of the patent:
**12.03.2025 Bulletin 2025/11**

(21) Application number: **15717841.9**

(22) Date of filing: **09.04.2015**

(51) International Patent Classification (IPC):
**B28B 19/00** (2006.01)  **E04C 2/04** (2006.01)
**B32B 13/02** (2006.01)  **B32B 13/08** (2006.01)
**C04B 28/14** (2006.01)

(52) Cooperative Patent Classification (CPC):
(C-Sets available)
**B28B 19/0092; B32B 13/02; B32B 13/08;**
**C04B 28/14; C04B 28/142; E04C 2/043;**
C04B 2111/00413; C04B 2111/00612;
C04B 2111/0062                              (Cont.)

(86) International application number:
**PCT/EP2015/057754**

(87) International publication number:
**WO 2015/185251 (10.12.2015 Gazette 2015/49)**

(54) **METHOD FOR PRODUCING A GYPSUM PLASTERBOARD AND THE GYPSUM PLASTERBOARD OBTAINED THEREBY**

VERFAHREN ZUR HERSTELLUNG EINER GIPSKARTONPLATTE UND DADURCH HERGESTELLTE GIPSKARTONPLATTE

PROCÉDÉ DE FABRICATION D'UNE PLAQUE DE PLÂTRE ET PLAQUE DE PLÂTRE OBTENUE SELON LEDIT PROCÉDÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **05.06.2014 PCT/EP2014/061704**

(43) Date of publication of application:
**12.04.2017 Bulletin 2017/15**

(73) Proprietor: **Knauf Gips KG**
**97346 Iphofen (DE)**

(72) Inventors:
• **MARTIN, Jürgen**
  **97355 Kleinlangheim (DE)**
• **KARAKOUSSIS, Stergios**
  **35321 Laubach (DE)**

• **KNAUF, Carlo**
  **97215 Weigenheim/Frankenberg (DE)**
• **HARTMANN, Alexander**
  **97355 Kleinlangheim (DE)**
• **PARASKOW, Dr. Georgi**
  **90409 Nürnberg (DE)**
• **GREBNER, Gosbert**
  **97320 Albertshofen (DE)**

(74) Representative: **Meissner Bolte Partnerschaft
mbB
Patentanwälte Rechtsanwälte
Postfach 86 06 24
81633 München (DE)**

(56) References cited:
**EP-A1- 1 488 920**     **EP-A1- 1 488 920**
**EP-A2- 0 957 212**     **WO-A1-2007/025734**
**WO-A1-2007/025734**    **FR-A1- 2 959 440**
**US-A1- 2011 041 443**  **US-A1- 2013 098 268**
**US-B1- 6 190 476**

**(Cont. next page)**

EP 3 152 023 B1

(52) Cooperative Patent Classification (CPC): (Cont.)

C-Sets
**C04B 28/14, C04B 24/383, C04B 40/0263,
C04B 2103/10;
C04B 28/142, C04B 14/368, C04B 24/383,
C04B 40/0263**

**Description**

The invention relates to a gypsum plasterboard and method for producing a gypsum plasterboard.

Methods for producing a gypsum plasterboard with two or more layers are known. Moreover, it is known to use one or more mixers for preparing a gypsum slurry being used for producing one of the several gypsum layers.

For the production of gypsum plasterboards a gypsum slurry (e.g. stucco with water) is distributed between two papers or cardboards. A sandwich of the gypsum slurry and paper proceeds on a band-conveyor while the gypsum slurry hardens. Thereafter, the sandwich is cut in a predetermined length and the multilayer boards proceed into a dryer. The mixture of gypsum and water is mixed in one or more mixers, wherein the mixture may contain additives like foam, starch and accelerators.

US 2 940 505 describes a method and an apparatus for the production of multilayer plates. The gypsum plasterboard of US 2 940 505 comprises a paper coating on both sides. The sandwich consists of three layers. First, a thin layer of pure gypsum is fed onto the surface of the moving papers. Thereafter, the two surfaces of the gypsum layers are brought into contact with a gypsum slurry forming the core of the sandwich plate. By this combination, a homogenous gypsum layer is formed. Moreover, a good bonding between the thin gypsum layer and the coating layer is achieved. Thereby, document US 2 940 505 attempts to reduce the addition of starch or another bonding means to the gypsum layer in order to reduce the costs of the production.

While the gypsum mixture of the core (according to US 2 940 505) contains an accelerator, the thin layer being fed onto the endless paper liners is cured gypsum (as an example 70 parts by weight of water to 100 parts by weight of lead plaster) and needs more time for setting than the gypsum mixture of the core. Thereby, on the one hand, a better absorption of the gypsum slurry within the paper liners is assured (before crystallisation starts), and on the other hand, the early hardening of the core accelerates the hardening of the pure gypsum slurry of the two thin outer layers (after contact with the gypsum slurry of the core).

The method of US 2 940 505 uses three mixers (chutes) for the production of two different kinds of gypsum slurry. The first kind of gypsum slurry is made in the first and third mixer. The second kind of gypsum slurry is made by a second mixer. The three mixers of US 2 940 505 are connected with three different distributing systems (comprising inter alia conveyors and dosing means) which appears very complicated and leads to a comparatively high consumption of electrical power and high costs for the construction of the system.

EP 1 389 157 B1 describes also a method with three mixers. Precisely, EP 1 389 157 B1 describes a manufacturing unit with three rotor mixers for the preparation of three different gypsum slurries. Each mixer has a slurry outlet that communicates with a corresponding duct for applying the slurry. The three mixers are fed by a common feeding device so that at least a part of the feed circuit is shared by all three mixers. All in all, the three-mixer-arrangement of EP 1 389 157 B1 is rather complex, in particular taking into account that all three mixers are (at least partly) fed by the same feed circuit.

EP 0 957 212 B1 describes a gypsum plasterboard in accordance with the preamble of claim 1 and a method using only two mixers. The central idea of EP 0 957 212 B1 is to use a first slurry of a first type of gypsum and a second slurry with a second, different type of gypsum. A first mixer receives phosphogypsum plaster, water and other additives to be employed in the middle layer of a plasterboard. A second, smaller, mixer receives the desulphogypsum plaster, water and additives to be employed in the surface layers of the plasterboard. Caused by the specific two types of gypsum, the outer layers have a shorter setting time than the core layer. Therefore, the bonding between the outer layers and the core layer is not very satisfying. The poor bonding properties can result in the formation of cracks, when the boards are cut.

EP 0 634 255 B1 describes a two-stage mixer with a first and second mixing chamber. Water and stucco are supplied continuously to the first chamber through inlets. The water and stucco are mixed by a rotor. Some of the resulting slurry passes directly from the first chamber to the second chamber. All in all, the two-stage-method of EP 0 634 255 B1 is complicated and difficult to control. Moreover, a variation of the amount of the liquid component water and/or dry components like stucco, starch, accelerator, fibres (inter alia) is not possible. Conclusively, it is impossible to produce two gypsum mixtures with substantially differing properties. At last, the amount of water within the slurry must be very high in order to distribute the gypsum slurry onto the cardboard. The same is valid for the core. All in all, the method of EP 0 634 255 B1 appears to be complicated and not very variable.

DE 26 04 483 A1 and DE 10 2004 008 184 A1 disclose to use methyl cellulose in a core gypsum layer. Moreover FR 2959440A1 discloses a method for producing a gypsum plasterboard in accordance with the preamble of claim 9.

It is an object of the present invention to propose a method of manufacturing a multilayer plasterboard which is easily controllable and which allows to form a multilayer plasterboard with satisfying quality, in particular with satisfying bonding and structure. In particular, it is an object of the invention to reduce the input of electrical power and carbon dioxide emissions.

Preferably, methyl cellulose is added. The methyl cellulose may be added to the first gypsum slurry and/or the second gypsum slurry. In a preferred embodiment, the methyl cellulose is added to a first and/or second outer (paper) layer. In addition or as an alternative, the methyl cellulose may be added to an intermediate layer between a gypsum layer and first and/or second outer (paper) layer. The methyl cellulose improves or allows a bonding between the gypsum layer and one or more outer (paper) layers.

The production of gypsum plasterboard may comprise water, binding agents, e.g. gypsum, optionally set-up agents, e.g. limestone or similar, and (minor parts) of set-up means such as pore formation means and/or surface active set-up means and/or native, modified starch or starch composites, retarder and/or accelerators and/or methyl cellulose.

The introduction of the main parts or the composition of the (main) slurry may be mixed in a mixer from that (e.g.) partial streams for the respective layers may be branched-off. In such partial streams, additives such as methyl cellulose may be mixed via, e.g. a pump and/or a turbulent mixing.

Functional additives, such as methyl cellulose may be introduced into the outer (paper) layer via (two dense) pumps or via the method as described above.

Preferably, the first and second slurry are different in respect of the kind and/or amount of additives. For example, the first slurry may contain less starch and/or retarder than the second slurry. A retarder is an additive which extends the set time of the gypsum slurry. Moreover, the amount of foam within the first slurry may be higher than in the second slurry.

In a preferred embodiment, a first feeding means is provided for feeding raw materials to the first mixer, wherein a separate second feeding means is provided for feeding raw materials to the second mixer. There may be no parts of the first feeding means which are also part of the second feeding means and vice versa. By this measure, it is possible to easily control the mixture of the first and second slurry.

The first mixer may be spaced apart from the second mixer. A distance between a first and second mixer may be, for example at least 20 cm or at least 50 cm. Thereby, any interference between the first mixer and the second mixer can be at least reduced (e.g. if one of the mixer's has to the changed).

The first mixer may be surrounded by a first housing. The second mixer may be surrounded by a second housing. In this regard, first and second mixers are separate units with respective housings and can be replaced without interfering with the other mixer.

The first slurry may have a lower density in its wet state and/or in its dry state than the second slurry. The first slurry may have a density of 0.8 to 1.2 g/cm$^3$ in its wet state. The second slurry may have a density of 1.4 to 1.7 g/cm$^3$ in its wet state. The core layer (dried first slurry) may have a density of 0.5 to 0.8 g/cm$^3$ in its dry state. The lower and/or upper layer (dried second slurry) may have a density of 1.0 to 1.2 g/cm$^3$ in its dry state. Altogether, a multilayer plasterboard is provided which has a small weight and has a good resistance against pressure from the outside.

The particular type of gypsum may be FGD or natural gypsum or titan gypsum. Preferably FGD gypsum or natural gypsum or titan gypsum is (exclusively) used both as raw material for the production of stucco (semi-hydrate) and as component within the first and/or second slurry.

The first part of the second slurry may be deposited on a first support means and/or a first coating layer, in particular a first paper, preferably before a joining of the lower layer and the core layer. The second part of the second slurry may be deposited on a second support means and/or a second coating layer, in particular second paper, preferably before a joining of the upper layer and the core layer. Thereby, a fast and clearly defined production of a multilayer gypsum board is possible.

The first slurry and/or the second slurry may be deposited via one or more silicone pipes for a fast and reliable delivering of the slurry to respective depositing layers.

The first slurry may contain stucco (semi-hydrate) in a range between 300 kg/m$^3$ to 520 kg/m$^3$. The second slurry may contain stucco (semi-hydrate) in a range of more than 1000 kg/m$^3$. More than 95% of the dry substance of the second slurry may be stucco and/or 60 to 90% of the dry substance of the first slurry may be stucco. Preferably, the rest to 100% dry substance of the first slurry contains foam and/or raw gypsum and/or inert materials and/or waste materials. 5 to 35% of the stucco (semi-hydrate) of the first slurry may be replaced by raw gypsum (di-hydrate) being preferably raw technical gypsum (FGD), natural gypsum and/or titan gypsum. 5 to 35% of the stucco (semi-hydrate) of the first slurry may be replaced by inert materials, e.g. quick lime, dolomite, perlite, quartz sand and/or waste materials like ash and/or building waste (being milled and graded to the necessary particle size). 5 to 35% of the stucco (semi-hydrate) of the first slurry may be replaced by water.

The second slurry may contain starch (preferably in an amount of more than 30 g/m$^2$) and/or a retarder and/or a plastificator (preferably naphthalene sulfonate), further preferably in an amount of less than 0.1% of the weight of the stucco (semi-hydrate within the slurry) and/or lignin sulfonate.

The second slurry may harden faster than the first slurry.

The first slurry may contain an accelerator. Starch and/or plastificators and/or paper fibres and/or mineral fibres and/or expanding dry additives such as perlite or vermiculite may be added.

The setting time of second gypsum slurry may be adjusted by the addition of an accelerator and/or the setting time of the first slurry may be regulated by a retarder such that the second slurry starts to set after the first slurry starts to set and/or such that the second slurry terminates to set before (or at the same time) the first slurry terminates to set.

Barium sulphate may be added to the second gypsum slurry, preferably in an amount so that the density of the lower and/or upper layer (after drying) is more than 1.2 g/cm$^3$.

After drying, the density of the upper and/or lower layer may be less than 3.5 times the density of the core layer.

The (average) thickness of the upper and/or lower layer may be equal or more than 0.5mm (after drying).

An area of the longitudinal edges of the gypsum plasterboard may contain a higher amount of the second gypsum slurry.

The first and second gypsum slurry may contain mineral fibres (glass fibres or stone fibres), wherein the second slurry may contain fibres in relation to the stucco in an amount which is 80% higher than the amount of fibres within the first slurry.

In general, the amount of stucco (calcined gypsum) within the production process may be reduced. The reduction of stucco may be achieved by the following measures. First, the reduction of the weight of the gypsum plasterboards implies a lower amount of stucco. For example, a higher amount of air may be introduced into the core layer (e.g. by using water foam). Second, the stucco can be partially replaced by inert materials and/or by raw (uncalcined) technical gypsum, FGD gypsum or natural gypsum. In both cases, a high amount of energy can be saved for the calcination of the gypsum and the drying of the final product.

The method may be used to produce a gypsum plasterboard having three layers (an inner gypsum layer or core layer and two outer layers or upper and lower layer). It is also possible to produce a gypsum plasterboard having more than three (e.g. 5, 7 or more) gypsum layers. In any case, it is preferred that at least two outer gypsum layers differ from the core layer in respect of their composition and/or other characteristics. The outer layers (surface layers) may be coated by a layer of paper.

After deposition of the gypsum slurries onto the (moving) paper, a sandwich of the gypsum slurries may be formed, the gypsum slurries may harden, and the (endless) sandwich of gypsum slurries or hardened layers may be cut into plates with a certain length. Thereafter, the cut plates may be dried within a drying device.

Preferably, there is no methyl cellulose in the at least one gypsum layer.

Another independent aspect of the present invention (which may be combined with the aspects as described above) relates to a multi-layer gypsum plasterboard comprising a first outer layer (paper layer), a first intermediate layer formed by a second gypsum slurry $S_2$, a core layer formed by a first gypsum slurry $S_1$, a second intermediate layer formed by a third gypsum slurry $S_3$ and a second outer layer (paper layer) as well as a method for producing a multi-layer gypsum plasterboard.

During production of a gypsum plasterboard, calcinated gypsum (semi-hydrate) is mixed with water in order to form a gypsum slurry. In this context, it must be differentiated between a stoichiometric need of water (the preparation water) and the actual water-gypsum-amount being set for a gypsum plasterboard production plant. The stoichiometric need of water describes the theoretically necessary water amount which is necessary for transforming semi-hydrate to gypsum.

However, it must be considered that the amount of binding material does not amount to 100% (given an actual charge of stucco, i.e. semi-hydrate) but, on the contrary, a lower degree of purity is given. Naturally gypsums have degrees of purity between 70 to 95%. Purity degrees below 70% are not suitable for the production of gypsum plasterboard. FGD gypsums or, respectively, technical gypsums have purity degrees of $\geq$ 95%, often between 95% and 98%.

The preparing water is the necessary water amount being needed by a predetermined amount of stucco (semi-hydrate) in order to achieve a complete wetting of the individual stucco grains with water. Only then, a mixture of water and stucco as slurry may be further processed with a ductile consistency. The relative amount of this preparing water in relation to the complete gypsum slurry is somewhat higher than the pure stoichiometric need of water.

The water-gypsum-value (WGV) for gypsum plasterboard facilities is defined as follows: the water-gypsum-value defines the relation of the amount of preparing water plus a (slight) excess of water (in order to reduce the viscosity of the gypsum slurry), to the amount of stucco. The (slight) water excess is (inter alia) necessary in order to achieve a sufficient bonding of the outer layers (coating layers, e.g. paper layers) of the gypsum plasterboard. A good wet bonding of the outer layers is a requirement for the drying process within a drying device. Altogether, it is necessary to use a substantial water excess in order to achieve a good bonding of the papers layers. This water excess is, however, not very efficient (high resources are needed). First, water is a valuable good in most countries which should be saved as far as possible; second, an excessive water amount must be removed in an energy intensive drying process.

Therefore, it is an object of the present invention to propose a gypsum plasterboard and a method for producing a gypsum plasterboard wherein the necessary water removal within the drying process is reduced.

This object is in particular solved by a gypsum plasterboard according to the features of claim 1 and/or a method of claim 9.

A gypsum plasterboard according to the invention, comprises a first outer layer, preferably paper layer, a first intermediate layer formed by a second gypsum slurry $S_2$, a core layer formed by a first gypsum slurry $S_1$, a second intermediate layer formed by third gypsum slurry $S_3$ and a second outer layer, in particular paper layer, wherein the first intermediate layer is arranged between the first outer layer and the core layer, and the second intermediate layer is arranged between the second outer layer and the core layer, wherein the intermediate layers have a (substantially) constant thickness between 0.1 mm and 3 mm preferably between 0.2 mm and 1 mm, wherein the first gypsum slurry comprises (constitutes) at least 80% by weight of all gypsum slurries $S_1$, $S_2$, and $S_3$:

$$\frac{m_{S_1}}{m_{S_1} + m_{S_2} + m_{S_3}} \geq 80\%$$

and wherein the first gypsum slurry is prepared and introduced with a lower water percentage (by weight) than the second $S_2$ and/or third $S_3$ gypsum slurry, wherein the gypsum slurry $S_1$ is prepared and introduced with a water percentage which is reduced by more than 10 wt. % compared with the gypsum slurry $S_2$ or $S_3$.

A method for producing a gypsum plasterboard, preferably according to one of the preceding aspects regarding the gypsum plasterboard, wherein the gypsum plasterboard has a first outer layer, in particular paper layer, a first intermediate layer, formed by a second gypsum slurry $S_2$, a core layer formed by a first gypsum slurry $S_1$, a second intermediate layer formed by a third gypsum slurry $S_3$, and a second outer layer, in particular paper layer comprising the steps:

-    depositing the second gypsum slurry $S_2$ onto the first outer layer for the formation of a first intermediate layer,
-    depositing the first gypsum slurry $S_1$ onto the first intermediate layer for the formation of the core layer,
-    depositing the third gypsum slurry $S_3$ onto the core layer or the second outer layer under formation of a second intermediate layer and
-    either covering the third gypsum slurry $S_3$ by the second outer layer or joint-depositing the second outer layer with the third gypsum slurry $S_3$ onto the core layer and
-    smoothing the multi-layer-gypsum plasterboard by a smoothing device, e.g. a smoothing bar,

wherein the gypsum slurry $S_1$ is prepared and introduced with a lower water percentage by weight than the gypsum slurries $S_2$ and $S_3$,
wherein the water percentage by weight of the gypsum slurry $S_1$ is reduced by at least 10%, preferably by at least 15%, compared with the water percentage by weight of the gypsum slurry $S_2$ and/or $S_3$.

A core aspect of the present invention is based on the idea of forming a gypsum plasterboard as multi-layer gypsum plasterboard, wherein (in comparison) thin, intermediate layers being adjacent to the outer (paper) layers are each formed of a gypsum slurry having a (in comparison) high degree of water, whereas a core layer between the intermediate layers has a (substantially) reduced water amount. Because the core layer constitutes the largest amount of the gypsum plasterboard (in relation to thickness, or, respectively volume) the water reduction within the gypsum slurry $S_1$ of the core layer is particularly relevant. The necessary amount of water in order to achieve a sufficient bonding of the intermediate layers (in particular paper layers) is only necessary for the (in comparison) thin intermediate layers so that the entire amount of added water (i.e. the entire amount of water which must be removed within the drying process) is substantially reduced. In preferred embodiments of the invention, the removal of water within the drying process may be reduced by (about) 10%. In an optional embodiment of the present invention, the gypsum slurry $S_1$ is prepared and introduced (fed) with a water amount (by weight) which is reduced by 10%, preferably by 15% compared with the gypsum slurry $S_2$ or the gypsum slurry $S_3$.

In a preferred embodiment, the gypsum slurry $S_1$ is prepared and introduced (fed) with a lower water amount (by weight) than both gypsum slurries $S_2$ and $S_3$.

It is possible that the core layer (preferably also one or both of the intermediate layers) is predominantly or exclusively formed by natural gypsum or FGD gypsum. As explained above, the purity degrees of FGD gypsum, or respectively, technical gypsum are substantially higher (namely $\geq 95\%$); whereas among the natural gypsums only such gypsums can be reasonably used which have a purity degree in the area of 70% to 95% (by weight).

In a preferred embodiment, the multi-layer gypsum plasterboard is formed such that the core layer (in its dried state) has the same or similar density as the intermediate layers (in the dried state), i.e. the density of all three layers differ preferably not more than 20%. Specific densities may be in the area of 650 kg/m$^3$ to 800 kg/m$^3$.

In another embodiment, it is possible that a multi-layer gypsum plasterboard is provided wherein the core layer has a reduced density with respect to at least one intermediate layer (preferably with respect to both intermediate layers), wherein the density of the core layer with respect to one or both intermediate layers is reduced by at least 20%, preferably by at least 30%. In a specific embodiment, the intermediate layers may have densities from 750 kg/m$^3$ to 1100 kg/m$^3$. The core layer, on the contrary, may have a reduced density of 625 kg/m$^3$ or less, e.g. from 625 kg/m$^3$ to 450 kg/m$^3$.

In particular as a tribute to production technical aspects, it is preferred that both intermediate layers are formed by the same gypsum slurry $S_2$, $S_3$. This reduces the expenses for a separate mixing of different gypsum slurries for the intermediate layers.

In a specific embodiment, the gypsum slurry $S_1$ for the formation of the core layer is mixed in a first mixer and the

gypsum slurry $S_2$ for the formation of both intermediate layers is mixed in a second mixer. In order to keep the water amount of gypsum slurry $S_1$ as low as possible and to have a good flowing characteristic of the gypsum slurry $S_1$ a liquefying means for the gypsum slurry $S_1$, in particular as addition of naphtalene sulfonate, lignin sulfonate, or any other liquefier (e.g. on the basis of melamin resin and polycarboxylates and possibly further additives) may be provided. If naphtalene sulfonate is used as liquefier, the preferred concentration is between 0.05 weight % to 3.0 weight %.

Within the method of the present invention the use and/or feed of the gypsum slurry $S_1$ is with a reduced amount of water by at least 10%, preferably at least 15% (by weight) compared with the gypsum slurry $S_2$ and/or $S_3$. In a further preferred embodiment, the gypsum slurry $S_1$ may have a lower amount of water with respect to both the gypsum slurry $S_2$ and $S_3$.

In a preferred embodiment, the gypsum plasterboard is fed to a drying oven after setting of the gypsum slurries $S_1$, $S_2$ and $S_3$, in particular after a formation in individual plates, wherein the gypsum plasterboard is fed to a drying process with asymmetric temperature curve over the time, wherein the temperatures in the first half of the drying process are set higher than the temperatures in the second half of the drying process, preferably wherein the average temperature in the first half of the drying process is at least 30K above the average temperature in the second half of the drying process.

Because a lower amount of water is removed within the drying process of the inventive producing method, advantageously another drying process may be suitable. It is sufficient if (only during a short time) a comparatively high temperature is set in order to remove the excess water from the intermediate layers being close to the surface. The temperature can be reduced in order to dry the entire plasterboard, i.e. also the core layer with reduced water amount.

The enclosed figures show embodiments and (further) aspects of the invention.

Fig. 1: A schematic illustration of an apparatus for manufacturing plasterboards.
Fig. 2: A graphic illustration of temperature control of a drying device of a standard gypsum plasterboard in comparison with a gypsum plasterboard of the present invention.
Fig. 3: A schematic layer structure of a gypsum plasterboard.

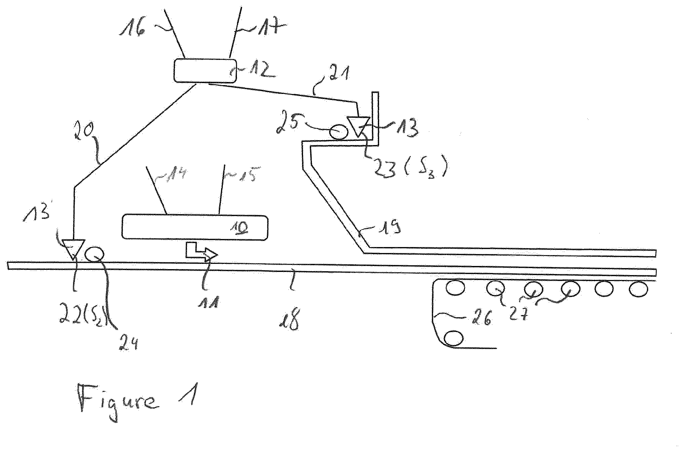

Fig. 1 shows an apparatus for manufacturing plasterboards, comprising a first mixer 10 for providing a first slurry 11 ($S_1$) and a second mixer 12 for providing a second slurry 13 ($S_2$, $S_3$). A dry component dosing line 14 and a wet component dosing line 15 delivers dry and wet components to the first mixer 10. A dry component dosing line 16 and a wet component dosing line 17 delivers dry and wet components to the second mixer 12.

The dosing lines 14 to 17 may comprise one or more transporting means for different components. The dry component dosing line 14 may comprise a weight belt (transport means) for the gypsum, in particular calcium sulphate hemihydrate (calcinated) gypsum and/or a weight belt (transport means) for inert material (which is not acting with water) and/or a starch dosing unit and/or an accelerator dosing unit and/or a fibre dosing unit and/or a vermiculite dosing unit and/or a collecting screw.

The wet component dosing line 15 may comprise a water delivering means (e.g. comprising a process water pump or water pump) and/or a retarder delivering unit (e.g. comprising a retarder pump) and/or a liquefier unit (e.g. comprising a liquefier pump) and/or a wax and/or silicone pump and/or a pulp pump (e.g. including a water-paper suspension) and/or a foam generator and/or a collecting pipeline.

The first mixer 10 is used for the preparation of a gypsum slurry for the core material of the plasterboard.

The second mixer 12 is used for a preparation of a gypsum slurry for the two intermediate layers (lower and upper gypsum layer) of the plasterboard.

The dry component dosing line 16 of the second mixer 12 may comprise a transport means (e.g. weight belt) for the gypsum (calcium sulphate hemihydrate or calcinated gypsum) and/or a starch dosing unit and/or an accelerator dosing unit and/or a (fine) calcium sulphate hemihydrate dust dosing unit and/or a fiber dosing unit and/or a collecting screw.

The wet component dosing line 17 of the second mixer 12 may comprise a water delivering means (water pump or process water pump) and/or a retarder delivering means (e.g. comprising a retarder pump) and/or a liquefier pump and/or a wax or silicone pump and/or a crystal modifier delivering means (e.g. comprising a crystal modifier pump) and/or a foam generator and/or a collecting pipeline.

The second slurry of the second mixer is deposited on a first paper 18 (face side paper) and a second paper 19 (back side paper) via a first (silicone) pipe 20 and a second (silicone) pipe 21. Both pipes 20, 21 (or only one of them) may be longer than 1.50 m. The diameter of one or both pipes may be between 15 and 30 mm.

First paper 18 and second paper 19 form outer layers. First paper 18 is transported and supported by a setting band 26 which is supported and turned by roller devices 27.

Before the slurries are deposited on the respective papers 18, 19, methyl cellulose may be deposited on the respective inner side of the papers 18, 19.

The second mixer 12 may rotate with 220 to 320 rotations per minute, and may have an emergency outlet with a diameter larger than 60 mm. The gypsum slurry amount supplied on the moving papers is adjusted with the slurry amount in the second mixer 12.

The first part 22 of the second slurry 13 is deposited on the first paper 18. A second part 23 of the second slurry 13 is deposited on the second paper 19. The papers move (in the enclosed figure) from left to right.

The first part 22 ($S_2$) of the second slurry 13 being deposited on the first paper 18 is distributed by a first roller device 24 (e.g. rotating metal or plastic roller) and transported further via the setting band 26 with roller devices 27. Roller device 24 allows a homogeneous thickness of the first part 22 ($S_2$) of the second gypsum slurry 13 and an improved binding with the first paper 18. The second part 23 ($S_3$) of the second slurry 13 being deposited on the second paper 19 is distributed by a second roller device 25.

The second paper 19 together with the second part 23 ($S_3$) of the second gypsum slurry 13 is deposited onto the core layer. The entire layer system comprising first paper 18, a first intermediate layer (formed by the first part 22 of the second slurry 13), the core layer, a second intermediate layer (formed by the second part 23 of the second slurry 13), the second paper 15 is transported below a smoothing bar (not shown in Fig. 1) in order to produce a gypsum plasterboard (or, respectively, a continuous gypsum multi-layer) with defined thickness.

The speed of the roller devices 24, 25 may be adjusted with speed controllers and is (usually) equal to half of the production line speed ($\pm$ 100%). The width of the first and/or second roller device may be (almost) equal to the width of the plasterboard (optionally up to 5 cm or up to 8 cm or up to 10 cm or up to 20 cm less).

The thickness of the intermediate layers (upper and lower layer) after drying is (preferably) higher than 0.5 mm and may vary between 0.5 and 1.5 mm. The thickness of the outer layers (in the edge area) can reach up to 50% of the thickness of the whole board.

The first slurry 11 of the first mixer 10 is deposited on the already distributed gypsum layer of the first part 22 of the second slurry 13. The first mixer 10 may rotate with 220 to 320 rotations per minute. In order to deposit the first slurry 11 on the first part 22 of the second slurry 13, silicone pipes may be used.

The second slurry may have a density which is at least 2.5 times the density of the first slurry (or higher), either in a wet state and/or a dry state. The core layer may contain less starch and retarder than the outer layers. The initial final setting times of the first slurry 11 may be shorter than for the second slurry 13.

A reduction of raw materials and energy can be achieved in two different ways.

First, comparatively light boards may be produced with a comparatively low content of calcinated gypsum (stucco). This technology allows a reduction of the board weight below 500 kg/m$^3$. Standard plasterboards have a weight of about 700 kg/m$^3$ (or approximately 6.9 kg stucco/m$^2$). A plasterboard with a density of 450 kg/m$^3$ contains (only) 4.45 kg stucco/m$^2$; this means a saving of (about) 35% stucco. The reaction of calcinated gypsum is accompanied with the reaction of water in the production process. Process water saving can reach up to 25%. The boards with densities of 450 to 500 kg/m$^3$ have excellent paper bonding characteristics and meet the requirements of the European quality norm EN 520 in term of board strength, fire resistance and acoustic properties. A reduction of 35% stucco and 25% water allows an energy saving of 20% and, therefore a substantial reduction of $CO_2$ emission.

The porosity of the core layer may be controlled by one, two or more foaming stations using foaming agents.

Second, a production of light fire resistant plasterboards is possible. Standard fire resistant plasterboards have a density of (about) 810 kg/m$^3$. The present invention allows to produce light plasterboards with a density of about 600 to 700 kg/m$^3$ (without any change in fire protective performance of the board). The corresponding reduction in weight corresponds with 20% stucco saving, 50% process water saving and (about) 10% energy saving (or the saving of a substantial amount of $CO_2$).

Third, the production of plasterboards with standard weight and adding of inert materials is possible. A corresponding method allows a substitution of up to 35% calcinated gypsum (stucco) in the recipe with e.g. semihydrate (raw FGD or natural gypsum) and/or limestone and/or dolomite and/or fly ash and/or other materials which are not reacting with water in the production process and exhibit a (more or less) inert behaviour. Process water saving can reach values of 25%. A reduction of 35% stucco and 25% water results in an energy saving of 20%, or a substantial reduction of $CO_2$ emissions.

All boards being produced with the method of the present invention meet the actual European norm for quality EN 520 in terms of board strength, fire resistance and acoustic properties.

In general, the plasterboards produced with the above described method have an excellent paper bond (independent of the properties and recipe of the core layer), allow the production of light gypsum boards (with a board density less than 500 kg/m$^3$), allow the substitution of up to 40% of stucco (calcinated gypsum) in the core layer with inert materials (e.g. FGD gypsum and/or limestone and/or dolomite and/or fly ash), allow the production of light fire resistant gypsum boards (with a board density less than 700 kg/m$^3$), prevent the production of plasterboards with partly calcinated and brittle long edges, allow a very high hardness of the long edges and the centre of the board (at the screw fixing points), improve sagging properties of plasterboards (up to 50%), allow the reduction of water to gypsum ratio in the core layer, allow reduction of any adhesive in the core layer e.g. starch and/or retarder and/or impregnating agent and/or glass fibre and/or STMP (sodium trimetaphosphate) and/or boric acid.

The method is applicable for paper covered gypsum boards as well as fibre covered gypsum boards, i.e. in the description above, "paper" may be replaced by "fiber layer".

The second mixer 12 may be smaller than the first mixer 10. For example, an inner volume of the second mixer 12 may be less than half of the inner volume of the first mixer 10.

The same type of gypsum is used as raw material for the production of the gypsum slurry (e.g. technical FGD gypsum, natural gypsum or titan gypsum). The type of gypsum is used both in its raw state (di-hydrate) and as stucco (semi-hydrate) that is produced by calcination.

The stucco (semi-hydrate) is used for both slurries. Within the second slurry, the amount of stucco may be 100% of the overall amount of gypsum. Within the first slurry, the amount of stucco may be in a range of 60 to 90% of the overall amount of gypsum. The raw gypsum (di-hydrate) is used for the production of the first slurry (e.g. preferably in an amount of 10 to 40% with respect to the overall amount of gypsum). Alternatively, it is possible to use inert materials (e.g. limestone, dolomite, perlite, quartz sand and/or waste material like ashes, building waste (milled and graded to the necessary particle size). In particular by use of 100% stucco within the second slurry, a good bonding with the coating paper and a satisfying stability of the final product is achieved. The reduced amount of semi-hydrate and the replacement by di-hydrate or inert additives within the first slurry leads to a saving of water (di-hydrate does not absorb water during setting). Therefore, the drying temperature or drying time may be lower leading to a reduced energy input (carbon dioxide emission).

In an embodiment, the second slurry does not contain any starch. However, it is possible to add starch in an amount of 30 g/m$^2$.

Starch may enhance the bonding between gypsum slurry and coating paper and protect the upper and/or lower gypsum layer from burning within the drying device. A retarder may be added into the slurry in order to retard the setting time of the gypsum mixture. Thereby, the flowability of the gypsum slurry may be regulated when the gypsum slurry is transported from the mixer to the deposition location via the corresponding leads (silicone pipes). Moreover, the risk of a plugging is reduced. In addition, a plastificator (e.g. naphthalene sulfonate and/or lignin sulfonate) may be used in an amount of less than 0.1% in respect of the amount of the semi-hydrate of the second slurry. The second slurry may have a higher density than the first slurry, wherein the ratio may be more than 1.5. After drying, the upper and/or lower layer (surface layers) may have a density of more than 1.2 g/cm$^3$; the density of the core layer may be less than 0.8 g/cm$^3$. In order to achieve the comparatively high density of the surface layers, optionally barium sulphate may be added in an amount of 5-20% in respect of the weight of the semi-hydrate. The second slurry preferably has a later start of the hardening and the same or an earlier end of the hardening compared with the first slurry. This guarantees, at the same time, a good bonding with the coating paper and a good bonding between the gypsum layers of the gypsum plasterboard. Starch, retarder, accelerator, plastificator, paper and/or mineral fibres may be added to the first slurry.

In accordance with a further alternative of the method, the foam from two different instable foam concentrates (with a comparatively short decay time of the foam) may be added to the first slurry so that air voids are formed within the plates which are comparatively large. The overall input of air, however, is the same. Two different devices (stations) may be used to generate the foam. The (two) foams are not mixed before being fed in the first mixer but are fed via two separate entries of the first mixer. Starch, a retarder, an accelerator, plastificators, paper and/or mineral fibres may be added to the first slurry. The composition of the second slurry may be the same as described above. Due to the added accelerators and retarders, the setting time of the two slurries is controlled so that the start of the hardening of the surface layers is after that of the core layer and the end of the hardening of the surface layers is before that of the core layer (or at the same time). The first slurry has a lower density than the second slurry. After drying, the density of the core layer is preferably less than 0.6 g/cm$^3$ and the density of the surface layers is preferably less than 1.2 g/cm$^3$. A ratio between the densities of the surface layers to the core layer may be more than 2.

According to the invention, the thickness of the surface layers may be (after drying) 0.5 mm (on average) and may vary up to 2 mm (over the width of the plate).

According to a third embodiment of the method (in particular for the production of fire resistant building plates), the semi-hydrate of the first slurry is reduced by 15% or more, wherein the reduced amount is balanced by the addition of inert materials (limestone, dolomite, perlite, quartz sand or waste materials like ashes or building waste) or by insertion of air in the form of water foam. Glass or stone fibres may be added to the first and/or second slurry.

In a fourth embodiment (which is based on any one of the three embodiments above), glucose-monohydrate (dextrose) may be added to the second slurry. The dextrose amount may vary between 0.01% to 1% of the weight of the semi-hydrate of the second slurry. The addition of dextrose modifies the crystal growth of the di-hydrate crystals within the process of rehydration of the semi-hydrate, wherein contact points between newly formed neighbouring crystals are augmented. This improves the stability of the surface layers and, thereby, improves the stability of the whole product. As a further alternative, the addition of dextrose to the first slurry is possible.

It is noted, that all embodiments lead to a reduction of stucco so that energy may be saved within the drying and calcination phase of the raw gypsum (di-hydrate) and, thereafter within the drying phase of the gypsum plasterboards.

Moreover, the amount of water within the production process is reduced. Again, this leads to an energy saving and correspondingly a reduced carbon dioxide emission.

In the following, two different embodiments of the present invention are compared with two conventional comparative plates: the data of the comparative plate is as follows:

| COMPARATIVE EXAMPLE | PRODUCTION APPARATUS WITH NATURAL GYPSUM - Reference plate 1 - | PRODUCTION APPARATUS WITH TECHNICAL GYPSUM - Reference plate 2 - |
|---|---|---|
| Band velocity | 50 m/min | 60 m/min |
| Purity degree gypsum | 85% | 95% |
| Interspersal amount (g) /100ml | 160 g | 168 |
| Water-gypsum-value stucco | 0.625 | 0.595 |
| Plate type | Board | Board |
| Plate thickness | 12.5 mm | 12.5 mm |
| Plate width | 1250 mm | 1250 mm |
| Plate weight | 8.6 kg/m$^2$ | 8.6 kg/m$^2$ |
| Volume weight Gypsum Core | 660 kg/m$^3$ | 660 kg/m$^3$ |
| Volume weight - complete plate | 690 kg/m$^3$ | 690 kg/m$^3$ |
| Gypsum amount | 6990 g/m$^2$ | 6890 g/m$^2$ |
| Water amount | 4960 g/m$^2$ | 4750 g/m$^2$ |
| WGV - apparatus | 0.71 | 0.69 |
| Additives | 190 g/m$^2$ | 200 g/m$^2$ |
| Wet weight | 12.55 kg/m$^2$ | 12.2 kg/m$^2$ |
| Slurry litre weight/wet density | 990 g/L ; 0.99 g/cm$^3$ | 960 g/L ; 0.96 g/cm$^3$ |
| Water removal (vaporisation) | 3.95 kg/m$^2$ | 3.60 kg/m$^2$ |

It is distinguished between two conventional reference plates, namely one reference plate 1 made from natural gypsum and a reference plate 2 made from technical gypsum. In both cases, a reference plate with a plate thickness of 12.5 mm is produced. A volume weight of 690 kg/m$^3$ for the entire plate (with paper layers) results in the case of reference plate 1 in a water removal of 3.95 kg/m$^2$ and in case of reference plate 2 in a water removal of 3.60 kg/m$^2$.

In the following example of the invention, a multi-layer gypsum plasterboard with intermediate layers of (each) 0.5 mm thickness and core layer of 11.5 mm thickness is provided so that a plate thickness of 12.5 mm is present (as in the reference plates). The data were as follows:

Example 1: Intermediate layers and core layers have almost identical densities; periphery data, e.g. band velocity and temperatures are identical to the conventional producing method; thickness of the intermediate layers is 0.5 mm for both papers layers.

| New method "sandwich type" | PRODUCTION APPARATUS WITH NATURAL GYPSUM - Example 1.1 - | | PRODCUTION APPARATUS WITH TECHNICAL GYPSUM - Inventive Example 1.2 - | |
|---|---|---|---|---|
| | Intermediate layers | Core | Intermediate layers | Core |
| Plate thickness | 12.5 mm | | 12.5 mm | |
| Layer thickness | **2 × 0.5mm** | 11.5mm | **2 × 0.5mm** | 11.5mm |
| Volume density plate | 690 kg/m$^3$ | | 690 kg/m$^3$ | |
| Gypsum layer thickness | 750 kg/m$^3$ | 650 kg/m$^3$ | 750 kg/m$^3$ | 650 kg/m$^3$ |
| Plate weight | 8.6 kg/m$^2$ | | 8.6 kg/m$^2$ | |
| Layer weight | 0.75 kg/m$^2$ | 7.86 kg/m$^2$ | 0.75 kg/m$^2$ | 7.86 kg/m$^2$ |
| Gypsum input | 640 g/m$^2$ | 6340 g/m$^2$ | 630 g/m$^2$ | 6250 g/m$^2$ |
| Water input | 460 g/m$^2$ | 3970 g/m$^2$ | 450 g/m$^2$ | 3680 g/m$^2$ |

(continued)

| New method "sandwich type" | PRODUCTION APPARATUS WITH NATURAL GYPSUM - Example 1.1 - | | PRODCUTION APPARATUS WITH TECHNICAL GYPSUM - Inventive Example 1.2 - | |
|---|---|---|---|---|
| | Intermediate layers | Core | Intermediate layers | Core |
| WGV - apparatus | 0.725 | 0.625 | 0.71 | 0.59 |
| Additives | 10 g/m$^2$ | 210 g/m$^2$ | 10 g/m$^2$ | 230 g/m$^2$ |
| Wet weight | 1.11 kg/m$^2$ | 10.9 kg/m$^2$ | 1.09 kg/m$^2$ | 10.5 kg/m$^2$ |
| Complete wet weight | 12.01 kg/m$^2$ | | 11.59 kg/m$^2$ | |
| Slurry litre weight/wet density slurry | 1110g/L ; 1.1g/cm$^3$ | 920g/L ; 0.92g/cm$^3$ | 1090 g/L ; 1.09g/cm$^3$ | 880 g/L ; 0.88g/cm$^3$ |
| Water removal (vaporisation) individual | 0.37 kg/m$^2$ | 3.04 kg/m$^2$ | 0.34 kg/m$^2$ | 2.63 kg/m$^2$ |
| Water removal (vaporisation) complete | **3.4 kg/m$^2$** | | **2.97 kg/m$^2$** | |
| **Reduction water removal in relation to comparative example** | **0.55 kg/m$^2$** | | **0.63 kg/m$^2$** | |

In case of example 1.1 (use of natural gypsum) the WGV-value of the intermediate layers was 0.725 (corresponding with a wet density of the gypsum slurry of 0.1 g/cm$^3$), wherein the core layer had a WGV-value of 0.625 and a wet density of (only) 0.29 g/cm$^3$. The water vaporisation is reduced to a value of 3.5 kg/m$^2$. In comparison with reference plate 1, a reduction of water removal of 0.55 kg/m$^2$ could be achieved.

In case of the plate 1.2 (where technical gypsum was used) a core layer of 11.5 mm thickness and intermediate layers of (each) 0.5 mm thickness were provided. The intermediate layers had a density (wet density) of 0.09 g/cm$^3$ and a WGV-value of 0.71. The core layer had a WGV-value of 0.59 (i.e. a reduced WGV-value) with a corresponding reduced wet density of 0.88 g/cm$^3$. Therefore, the entire water removal was 2.97 kg/m$^2$ with a reduction of water removal of 0.63 kg/m$^2$ in comparison with reference plate 2. The present example plates 1.1 and 1.2 are multi-layer gypsum plasterboards wherein intermediate layers and core layer have a (substantially) identical thickness (the thickness of the intermediate layers of 750 kg/m$^3$ and the core layer of 650 kg/m$^3$ is less than 20% ).

Example 2: Intermediate layers and core layer have almost identical density; periphery data as band velocity temperatures etc. identical to the standard method. Thickness of the intermediate layers (each) 1.0 mm per paper side.

| New method "sandwich type" | PRODUCTION APPARATUS WITH NATURAL GYPSUM - Example 2.1 - | | PRODUCTION APPARATUS WITH TECHNICAL GYPSUM - Inventive Example 2.2 - | |
|---|---|---|---|---|
| | Intermediate layers | Core | Intermediate layers | Core |
| Plate thickness | 12,5 mm | | 12,5 mm | |
| Layer thickness | **2 × 1.0mm** | 10.5mm | **2 × 1.0mm** | 10.5mm |
| Volume density plate | 690 kg/m$^3$ | | 690 kg/m$^3$ | |
| Gypsum layer thickness | 740 kg/m$^3$ | 640 kg/m$^3$ | 740 kg/m$^3$ | 640 kg/m$^3$ |
| Plate weight | 8.6 kg/m$^2$ | | 8.6 kg/m$^2$ | |
| Layer weight | 1.49 kg/m$^2$ | 7.12 kg/m$^2$ | 1.5 kg/m$^2$ | 7.11 kg/m$^2$ |
| Gypsum input | 1280 g/m$^2$ | 5695 g/m$^2$ | 1260 g/m$^2$ | 5615 g/m$^2$ |
| Water input | 930 g/m$^2$ | 3550 g/m$^2$ | 895 g/m$^2$ | 3310 g/m$^2$ |
| WGV - apparatus | 0.725 | 0.625 | 0.71 | 0.59 |

(continued)

| New method "sandwich type" | PRODUCTION APPARATUS WITH NATURAL GYPSUM - Example 2.1 - | | PRODUCTION APPARATUS WITH TECHNICAL GYPSUM - Inventive Example 2.2 - | |
|---|---|---|---|---|
| | Intermediate layers | Core | Intermediate layers | Core |
| Additives | 10 g/m$^2$ | 220 g/m$^2$ | 10 g/m$^2$ | 240 g/m$^2$ |
| Wet weight | 2.22 kg/m$^2$ | 9.84 kg/m$^2$ | 2.17 kg/m$^2$ | 9.48 kg/m$^2$ |
| Complete wet weight | 12.06 kg/m$^2$ | | 11.65 kg/m$^2$ | |
| Slurry litre weight/wet density slurry | 1110g/L ; 1.1g/cm$^3$ | 900g/L ; 0.90g/cm$^3$ | 1085 g/L ; 1.08g/cm$^3$ | 870 g/L ; 0.87g/cm$^3$ |
| Water removal (vaporisation) individual | 0.73 kg/m$^2$ | 2.72 kg/m$^2$ | 0.68 kg/m$^2$ | 2.36 kg/m$^2$ |
| Water removal (vaporisation) complete | **3.45 kg/m$^2$** | | **3.04 kg/m$^2$** | |
| **Reduction water removal in relation to comparative example** | **0.50 kg/m$^2$** | | **0.56 kg/m$^2$** | |

In the second example, intermediate layers and a core layer with comparable dry densities (with a dry density of 750 kg/m$^3$ for the intermediate layers and 640 kg/m$^3$ for the core layer) are provided. Otherwise, the thickness of the intermediate layers is (each) 1.0 mm whereas the thickness of the core layer 10.5 is mm. The wet density of the gypsum slurry was in the case of exemplary plate 2.1 (being produced from natural gypsum) 1.1 g/cm$^3$ for the intermediate layers and 0.90 g/cm$^3$ for the core layer. Correspondingly, there was a complete water removal of 3.45 kg/m$^2$ for exemplary plate 2.1 and a reduction of the water removal (with respect to reference plate 1) of 0.50 kg/m$^2$. Exemplary plate 2.2 was produced from technical gypsum with a wet density of the gypsum slurry of 1.08 g/cm$^3$ for the intermediate layers and 0.87 g/cm$^3$ for the core layer. There resulted a complete water removal of 3.04 kg/m$^2$ and a reduction of water removal of 0.56 kg/m$^2$ (in comparison with reference plate 2).

Example 3: Intermediate layers and core layer with different density; periphery data as band velocity temperatures, etc. identical with conventional method. Thickness of the intermediate layers (each) 0.5 mm per paper side.

| New method "sandwich type" | PRODUCTION APPARATUS WITH NATURAL GYPSUM - Example 3.1 - | | PRODUCTION APPARATUS WITH TECHNICAL GYPSPUM - Inventive Example 3.2 - | |
|---|---|---|---|---|
| | Intermediate layers | Core | Intermediate layers | Core |
| Plate thickness | 12.5 mm | | 12.5 mm | |
| Layer thickness | **2 × 1.0 mm** | 11.5mm | **2 × 1.0 mm** | 11.5mm |
| Volume density plate | 690 kg/m$^3$ | | 690 kg/m$^3$ | |
| Gypsum layer thickness | 1050 kg/m$^3$ | 625 kg/m$^3$ | 1050 kg/m$^3$ | 625 kg/m$^3$ |
| Plate weight | 8.6 kg/m$^2$ | | 8.6 kg/m$^2$ | |
| Layer weight | 1.05 kg/m$^2$ | 7.56 kg/m$^2$ | 1.05 kg/m$^2$ | 7.56 kg/m$^2$ |
| Gypsum input | 905 g/m$^2$ | 6075 g/m$^2$ | 890 g/m$^2$ | 5995 g/m$^2$ |
| Water input | 655 g/m$^2$ | 3800 g/m$^2$ | 630 g/m$^2$ | 3535 g/m$^2$ |
| WGV - apparatus | 0.725 | 0.625 | 0.71 | 0.59 |
| Additives | 10 g/m$^2$ | 210 g/m$^2$ | 10 g/m$^2$ | 240 g/m$^2$ |
| Wet weight | 1.57 kg/m$^2$ | 10.47 kg/m$^2$ | 1.53 kg/m$^2$ | 10.09kg/m$^2$ |
| Complete wet weight | 12.04 kg/m$^2$ | | 11.62 kg/m$^2$ | |

(continued)

| New method "sandwich type" | PRODUCTION APPARATUS WITH NATURAL GYPSUM - Example 3.1 - | | PRODUCTION APPARATUS WITH TECHNICAL GYPSPUM - Inventive Example 3.2 - | |
|---|---|---|---|---|
| | Intermediate layers | Core | Intermediate layers | Core |
| Slurry litre weight/wet density slurry | 1570g/L ; 1.57g/cm$^3$ | 880g/L ; 0.88g/cm$^3$ | 1525 g/L ; 1.53g/cm$^3$ | 850 g/L ; 0.85g/cm$^3$ |
| Water removal (vaporisation) individual | 0.52 kg/m$^2$ | 2.91 kg/m$^2$ | 0.47 kg/m$^2$ | 2.52 kg/m$^2$ |
| Water removal (vaporisation) complete | **3.43 kg/m$^2$** | | **2.99 kg/m$^2$** | |
| **Reduction water removal in relation to comparative example** | **0.52 kg/m$^2$** | | **0.61 kg/m$^2$** | |

The third example is a multi-layer plasterboard with a core layer and intermediate layers wherein the core layer has a reduced density with respect to the intermediate layers. Again, two exemplary plates have been produced, namely a plate made from natural gypsum and a plate made from technical gypsum. The thickness of the intermediate layers was (in both cases) 1.0 mm. The thickness of the core layer was (in both cases) 10.5 mm. In case of exemplary plate 3.1 (being produced from natural gypsum) a core layer with a density of 625 kg/m$^3$ (in its dried state) and an intermediate layer with a density of 1050 kg/m$^3$ (in its dried state) was realised. In case of exemplary plate 3.1, the WGV value was 0.725 for the intermediate layers with a wet density of the gypsum slurry of 1.57 g/cm$^3$. The WGV value of the core layer was 0.625 with a wet density of the gypsum slurry of 0.88 g/cm$^3$. The complete water removal was 3.43 kg/m$^2$ with a reduction of the water removal of 0.52 kg/m$^2$ (in comparison with reference plate 1). In case of exemplary plate 3.2 (being made from technical gypsum), the WGV value for the intermediate layers was 0.71 and the WGV value for the core layer was 0.59 with a wet density of the gypsum slurry of 1.53 g/cm$^3$ for the intermediate layer and 0.85 g/cm$^3$ for the core layer. As a result, there was a complete water removal of 2.99 kg/m$^2$ with a reduction of water removal of 0.61 kg/m$^2$ (in comparison with reference plate 2).

The values and calculation in examples 1 to 3 relate to the application of β-semihydrate (β-gypsum) which is usual for the plate production. Preferably, exclusively β-semi-hydrate or, respectively, β-gypsum is used. Alternatively, it is possible to use α-semihydrate (α-gypsum) and β-semihydrate (β-gypsum) in an amount of 1:4 to 4:1, for example 1:1. Not depending from whether FGD or natural gypsum is used, pure α-gypsum should not be applied.

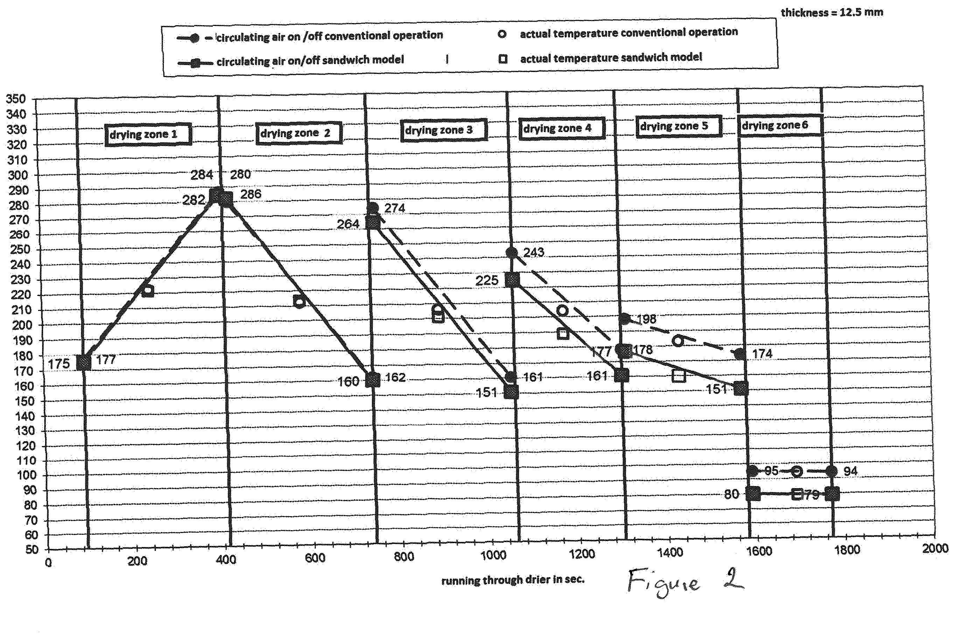

Fig. 2 shows a comparison of the temperature of a conventional gypsum plate and of a gypsum plate according to example 1 of the present invention. Precisely, the example relates to a longitudinally aired drier with altogether six heating zones (drying zones), which are mounted in a row and define the complete length of the drier.

In Fig. 2 dotted lines illustrate the ambient temperature in a conventional method. The conventional method is used in order to dry a gypsum plasterboard according to the prior art. The small circles illustrate the actual temperature of the corresponding heating zones in order to dry the gypsum plasterboard within the conventional method. The temperature of the gypsum plasterboard itself (also called gypsum core temperature) is (until the fifth zone) between (about) 90°C to 100°C.

The temperature numbers immediately at the transition areas of the individual zones correspond with the entry or, respectively, exit temperature within the corresponding zone. For example, the entry temperature in zone 4 of the conventional method is 243°C and the exit temperature is 177°C. The temperature difference between entry and exit temperature of 66°C reflects (approximately) the drying process of the gypsum plasterboard. The higher the difference, the more water is removed from the gypsum plasterboard.

The solid lines show the ambient temperature being necessary for drying the gypsum plasterboard of example 1. The large squares show the actual temperature of the corresponding heating zones in order to dry the gypsum plasterboard of example 1.

Altogether, it can be taken from Fig. 2 that a reduced temperature is necessary in order to dry the gypsum plasterboard (because the amount of water which must be removed is lower). Therefore, energy can be saved. The different "zones" characterise areas where the corresponding gypsum slurry runs within a drying process.

The present embodiments show that different specifications of the corresponding layer thicknesses and layer densities allow a substantial reduction of water and, insofar, substantially reduces the overall energy input which is necessary in order to vaporise the water of the conventional plate. Insofar, the present invention allows a two-fold reduction of the input of resources, namely, on the one hand, the amount of water as such can be reduced, on the other hand, the necessary heating energy for drying the water excess can be reduced.

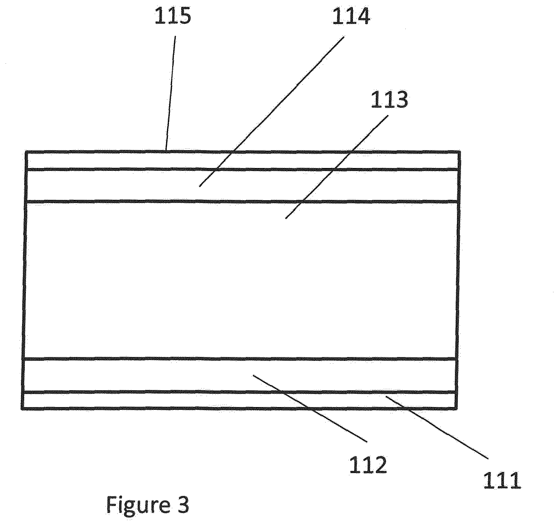

Fig. 3 shows the layer structure the layer structure of a gypsum plasterboard of the present invention (111 = first paper layer, 112 = first intermediate layer, 113 = core layer, 114 = second intermediate layer, 115 = second paper layer).

Reference numerals

| | |
|---|---|
| $S^1$ | first slurry |
| $S_2$ | second slurry |
| $S_3$ | third slurry |
| 10 | first mixer |
| 11 | first slurry |
| 12 | second mixer |
| 13 | second slurry |
| 14 | dry component dosing line |
| 15 | wet component dosing line |
| 16 | dry component dosing line |
| 17 | wet component dosing line |
| 18 | first paper |
| 19 | second paper |
| 21 | (first) silicone pipe |
| 21 | (second) silicone pipe |
| 22 | first part |
| 23 | second part |
| 24 | first roller device |
| 25 | second roller device |
| 26 | setting band |
| 27 | roller device |
| 111 | first paper layer |
| 112 | first intermediate layer |
| 113 | core layer |
| 114 | second intermediate layer |
| 115 | second paper layer |

**Claims**

1. A gypsum plasterboard, comprising a first outer layer, preferably paper layer (111), a first intermediate layer (112) formed by a second gypsum slurry $S_2$, a core layer (113) formed by a first gypsum slurry $S_1$, a second intermediate layer (114) formed by a third gypsum slurry $S_3$ and a second outer layer, in particular paper layer (115),

   wherein the first intermediate layer (112) is arranged between the first outer layer (111) and the core layer (113), and the second intermediate layer (114) is arranged between the second outer layer (115) and the core layer (113),
   wherein the intermediate layers (112, 114) have an, at least substantially, constant thickness from 0.1 mm to 3 mm, preferably from 0.2 mm to 1 mm,
   wherein the first gypsum slurry comprises at least 80% by weight of all gypsum slurries $S_1$, $S_2$ and $S_3$:

   $$\frac{m_{S_1}}{m_{S_1} + m_{S_2} + m_{S_3}} \geq 80\%$$

   **characterised in that**
   the first gypsum slurry is prepared and introduced with a lower water percentage by weight than the second $S_2$ and/or third $S_3$ gypsum slurry,
   wherein the gypsum slurry $S_1$ is prepared and introduced with a water percentage which is reduced by more than 10 wt.-%, compared with the gypsum slurry $S_2$ or $S_3$.

2. The gypsum plasterboard according to claim 1, **characterised in that** the gypsum slurry $S_1$ is prepared and introduced with a water percentage which is reduced by more than 15 weight %, compared with the gypsum slurry $S_2$ and/or $S_3$.

3. The gypsum plasterboard according to claim 1 or 2, **characterised in that** the core layer (113), preferably also the first (112) and/or second (114) intermediate layer is predominantly or exclusively formed by natural gypsum or FGD gypsum and/or
**characterised in that**
the core layer (113) is formed by a mixture of $\alpha$-gypsum and $\beta$-gypsum, wherein the relation of $\alpha$-gypsum to $\beta$-gypsum is between 1:4 to 4:1, preferably 1:2 to 2:1, in particular 1:1.

4. The gypsum plasterboard according to one of the claims 1 to 3, **characterised in that** the core layer (113) has, in its dried state, the same or similar density compared with the first (112) and/or second (114) intermediate layer, in their dried state,
wherein a difference in density between the layers (112, 113, 114) is preferably less than 20%.

5. The gypsum plasterboard according to one of the claims 1 to 4, **characterised in that** the core layer (113) has in its dried state a reduced density compared with the first and/or second intermediate layers (112, 114),
wherein the density of the core layer (113) is preferably reduced by at least 20%, further preferably by at least 30%, compared with the first (112) and/or second (114) intermediate layer.

6. The gypsum plasterboard according to one of the claims 1 to 5, **characterised in that** the intermediate layers (112, 114) are formed by the same gypsum slurry $S_2$, $S_3$.

7. The gypsum plasterboard according to one of the claims 1 to 6, **characterised in that** the core layer (113) is formed by a gypsum slurry $S_1$ being prepared in a first mixer (10), and the intermediate layers (112, 114) are formed by a second gypsum slurry $S_2$ being prepared in a second mixer (12).

8. The gypsum plasterboard according to one of the claims 1 to 7, **characterised in that** the gypsum slurry $S_1$ comprises a liquefying means, in particular naphtalene sulfonate, and/or lignin sulfonate and/or another liquefier for the formation of the core layer.

9. A method for producing a gypsum plasterboard, preferably according to one of the claims 1 to 8, wherein the gypsum plasterboard has a first outer layer, in particular, paper layer (111), a first intermediate layer (112), formed by a second gypsum slurry $S_2$, a core layer (113) formed by a first gypsum slurry $S_1$, a second intermediate layer (114) formed by a third gypsum slurry $S_3$, and a second outer layer, in particular paper layer (115) comprising the steps:

- depositing the second gypsum slurry $S_2$ onto the first outer layer (111) for the formation of the first intermediate layer (112),
- depositing the first gypsum slurry $S_1$ onto the first intermediate layer (112) for the formation of the core layer (113),
- depositing the third gypsum slurry $S_3$ onto the core layer (113) or the second outer layer (115) under formation of the second intermediate layer (114) and
- either covering the third gypsum slurry $S_3$ by the second outer layer (115) or joint-depositing the second outer layer (115) with the third gypsum slurry $S_3$ onto the core layer (113) and **characterised by**
- smoothing the multi-layer-gypsum plasterboard by a smoothing device, e.g. a smoothing bar,
wherein the gypsum slurry $S_1$ is prepared and introduced with a lower water percentage by weight than the gypsum slurries $S_2$ and $S_3$,
wherein the water percentage by weight of the gypsum slurry $S_1$ is reduced by at least 10%, preferably by at least 15%, compared with the water percentage by weight of the gypsum slurry $S_2$ and/or $S_3$.

10. The method of claim 9, **characterised in that** the gypsum plasterboard is fed to a drying oven after setting of the gypsum slurries $S_1$, $S_2$, $S_3$, in particular after a formation in individual plates,

wherein the gypsum plasterboard is fed to a drying process with asymmetric temperature curve over the time,
wherein the temperatures in the first half of the drying process are set higher than the temperatures in the second half of the drying process,
preferably wherein the average temperature in the first half of the drying process is at least 30K above the average temperature in the second half of the drying process.

11. The method of claim 9 or 10 comprising the steps of:

- providing the first gypsum slurry $S_1$ of a particular type of gypsum, in particular FGD or natural gypsum or titan gypsum, by use of a first mixer (10) preferably wherein a first feeding means is provided for feeding raw materials to the first mixer,
- providing the second and third gypsum slurry $S_2$, $S_3$ as parts of a common slurry of the particular type of gypsum by use of a separate second mixer, which is preferably spaced from the second mixer, preferably wherein a separate second feeding means is provided for feeding raw materials to the second mixer
- depositing the second gypsum slurry $S_2$ such that the first intermediate layer (112) of the second gypsum slurry is formed
- depositing the third gypsum slurry $S_3$ such that the second intermediate layer (114) of the third gypsum slurry is formed
- depositing at least a part of the first gypsum slurry $S_1$ onto the first and/or second intermediate layer (112, 114) layer such that the core layer (113) of the first gypsum slurry is formed between the first and second intermediate layer (112, 114).

12. The method of one of the claims 9 to 11, **characterised in that**

the first and second gypsum slurry $S_1$, $S_2$ are different in respect of kind and/or amount of additives and/or
the first and third gypsum slurry $S_1$,$S_3$ are different in respect of kind and/or amount of additives and/or
the first and the common gypsum slurry of claim 11 are different in respect of kind and/or amount of additives and/or
methyl cellulose is added, optionally to the first gypsum slurry and/or the second gypsum slurry and/or the third gypsum slurry and/or the common gypsum slurry of claim 11, preferably to the first and/or second outer layer, and/or to an intermediate layer between a gypsum layer and first and/or second outer layers.

13. The method according to one of the claims 9 to 12, **characterised in that**

the second gypsum slurry $S_2$ is deposited on a first support means and/or a first coating layer, in particular first paper (18), preferably before a joining of the lower layer and the core layer, and/or
the third gypsum slurry $S_3$ is deposited on a second support means and/or a second coating layer, in particular second paper, preferably before a joining of the first and second intermediate layer and the core layer.

14. The method according to one of the claims 9 to 13, **characterised in that** the second and/or third gypsum slurry $S_2$, $S_3$ and/or the common gypsum slurry of claim 11 hardens faster than the first gypsum slurry $S_1$.

15. The method according to one of the claims 9 to 14, **characterised in that** the thickness of the first and/or second intermediate layer is equal or more than 0.5 mm and/or
an area of the longitudinal edges of the gypsum plasterboard contains a higher amount of the second and/or third gypsum slurry $S_2$, $S_3$ and/or the common gypsum slurry of claim 11.

**Patentansprüche**

1. Gipskartonplatte, umfassend eine erste Außenschicht, vorzugsweise Papierschicht (111), eine erste Zwischenschicht (112), die durch einen zweiten Gipsbrei $S_2$ gebildet ist, eine Kernschicht (113), die durch einen ersten Gipsbrei $S_1$ gebildet ist, eine zweite Zwischenschicht (114), die durch einen dritten Gipsbrei $S_3$ gebildet ist, und eine zweite Außenschicht, insbesondere Papierschicht (115),

wobei die erste Zwischenschicht (112) zwischen der ersten Außenschicht (111) und der Kernschicht (113) angeordnet ist und die zweite Zwischenschicht (114) zwischen der zweiten Außenschicht (115) und der Kernschicht (113) angeordnet ist,
wobei die Zwischenschichten (112, 114) eine zumindest im Wesentlichen konstante Dicke von 0,1 mm bis 3 mm, vorzugsweise von 0,2 mm bis 1 mm, aufweisen,
wobei der erste Gipsbrei mindestens 80 Gew.-% sämtlicher Gipsbreie $S_1$, $S_2$ und $S_3$ umfasst:

$$\frac{m_{S_1}}{m_{S_1} + m_{S_2} + m_{S_3}} \geq 80\%$$

**dadurch gekennzeichnet, dass**
der erste Gipsbrei mit einem geringeren Wasseranteil in Gewichtsprozent als der zweite $S_2$- und/oder der dritte $S_3$-Gipsbrei zubereitet und eingebracht wird,
wobei der Gipsbrei $S_1$ mit einem Wasseranteil zubereitet und eingebracht wird, der um mehr als 10 Gew.-% im Vergleich zu dem Gipsbrei $S_2$ oder $S_3$ reduziert ist.

2. Gipskartonplatte nach Anspruch 1, **dadurch gekennzeichnet, dass** der Gipsbrei $S_1$ mit einem Wasseranteil zubereitet und eingebracht wird, der um mehr als 15 Gew.-% im Vergleich zu dem Gipsbrei $S_2$ und/oder $S_3$ reduziert ist.

3. Gipskartonplatte nach Anspruch 1 oder 2, **dadurch gekennzeichnet, dass** die Kernschicht (113), vorzugsweise auch die erste (112) und/oder zweite (114) Zwischenschicht, überwiegend oder ausschließlich aus Naturgips oder FGD-Gips gebildet ist, und/oder
   **dadurch gekennzeichnet, dass**
   die Kernschicht (113) durch eine Mischung aus $\alpha$-Gips und $\beta$-Gips gebildet wird, wobei das Verhältnis von $\alpha$-Gips zu $\beta$-Gips zwischen 1:4 bis 4:1, vorzugsweise 1:2 bis 2:1, insbesondere 1:1, liegt.

4. Gipskartonplatte nach einem der Ansprüche 1 bis 3, **dadurch gekennzeichnet, dass** die Kernschicht (113) in ihrem getrockneten Zustand im Vergleich zu der ersten (112) und/oder der zweiten (114) Zwischenschicht in ihrem getrockneten Zustand die gleiche oder eine ähnliche Dichte aufweist,
   wobei ein Dichteunterschied zwischen den Schichten (112, 113, 114) vorzugsweise weniger als 20 % beträgt.

5. Gipskartonplatte nach einem der Ansprüche 1 bis 4, **dadurch gekennzeichnet, dass** die Kernschicht (113) in ihrem getrockneten Zustand eine reduzierte Dichte im Vergleich zu der ersten und/oder der zweiten Zwischenschicht (112, 114) aufweist,
   wobei die Dichte der Kernschicht (113) vorzugsweise um mindestens 20 %, weiter bevorzugt um mindestens 30 %, im Vergleich zu der ersten (112) und/oder der zweiten (114) Zwischenschicht reduziert ist.

6. Gipskartonplatte nach einem der Ansprüche 1 bis 5, **dadurch gekennzeichnet, dass** die Zwischenschichten (112, 114) aus dem gleichen Gipsbrei $S_2$, $S_3$ gebildet sind.

7. Gipskartonplatte nach einem der Ansprüche 1 bis 6, **dadurch gekennzeichnet, dass** die Kernschicht (113) durch einen Gipsbrei $S_1$ gebildet ist, der in einem ersten Mischer (10) zubereitet wird, und die Zwischenschichten (112, 114) durch einen zweiten Gipsbrei $S_2$ gebildet sind, der in einem zweiten Mischer (12) zubereitet wird.

8. Gipskartonplatte nach einem der Ansprüche 1 bis 7, **dadurch gekennzeichnet, dass** der Gipsbrei $S_1$ ein Verflüssigungsmittel, insbesondere Naphthalinsulfonat, und/oder Ligninsulfonat und/oder einen anderen Verflüssiger zur Bildung der Kernschicht umfasst.

9. Verfahren zum Herstellen einer Gipskartonplatte, vorzugsweise nach einem der Ansprüche 1 bis 8, wobei die Gipskartonplatte eine erste Außenschicht, insbesondere Papierschicht (111), eine erste Zwischenschicht (112), die durch einen zweiten Gipsbrei $S_2$ gebildet wird, eine Kernschicht (113), die durch einen ersten Gipsbrei $S_1$ gebildet wird, eine zweite Zwischenschicht (114), die durch einen dritten Gipsbrei $S_3$ gebildet wird, und eine zweite Außenschicht, insbesondere Papierschicht (115), aufweist, umfassend die folgenden Schritte:

   - Aufbringen des zweiten Gipsbreis $S_2$ auf die erste Außenschicht (111) zur Bildung der ersten Zwischenschicht (112),
   - Aufbringen des ersten Gipsbreis $S_1$ auf die erste Zwischenschicht (112) zur Bildung der Kernschicht (113),
   - Aufbringen des dritten Gipsbreis $S_3$ auf die Kernschicht (113) oder die zweite Außenschicht (115) unter Bildung der zweiten Zwischenschicht (114) und
   - entweder Abdecken des dritten Gipsbreis $S_3$ durch die zweite Außenschicht (115) oder gemeinsames Aufbringen der zweiten Außenschicht (115) mit dem dritten Gipsbrei $S_3$ auf die Kernschicht (113) und **gekennzeichnet durch**

- Glätten der mehrschichtigen Gipskartonplatte durch eine Glättvorrichtung, z. B. eine Glättstange,

wobei der Gipsbrei $S_1$ mit einem geringeren Wasseranteil in Gewichtsprozent als die Gipsbreie $S_2$ und $S_3$ zubereitet und eingebracht wird, wobei der Wasseranteil in Gewichtsprozent des Gipsbreis $S_1$ um mindestens 10 %, vorzugsweise um mindestens 15 %, im Vergleich zu dem Wasseranteil in Gewichtsprozent des Gipsbreis $S_2$ und/oder $S_3$ reduziert ist.

10. Verfahren nach Anspruch 9, **dadurch gekennzeichnet, dass** die Gipskartonplatte nach dem Abbinden der Gipsbreie $S_1$, $S_2$, $S_3$, insbesondere nach einer Bildung in Einzelplatten, einem Trockenofen zugeführt wird,

wobei die Gipskartonplatte einem Trocknungsprozess mit einem asymmetrischen Temperaturverlauf im Zeitverlauf zugeführt wird,
wobei die Temperaturen in der ersten Hälfte des Trocknungsprozesses höher als die Temperaturen in der zweiten Hälfte des Trocknungsprozesses eingestellt sind, vorzugsweise wobei die Durchschnittstemperatur in der ersten Hälfte des Trocknungsprozesses mindestens 30K über der Durchschnittstemperatur in der zweiten Hälfte des Trocknungsprozesses liegt.

11. Verfahren nach Anspruch 9 oder 10, umfassend die folgenden Schritte:

- Bereitstellen des ersten Gipsbreis $S_1$ einer bestimmten Sorte von Gips, insbesondere FGD oder Naturgips oder Titangips, unter Verwendung eines ersten Mischers (10), wobei vorzugsweise ein erstes Zufuhrmittel zum Zuführen von Rohstoffen zu dem ersten Mischer bereitgestellt ist,
- Bereitstellen des zweiten und des dritten Gipsbreis $S_2$, $S_3$ als Teile eines gemeinsamen Breis der bestimmten Sorte von Gips unter Verwendung eines separaten zweiten Mischers, der vorzugsweise von dem zweiten Mischer beabstandet ist, wobei vorzugsweise ein separates zweites Zufuhrmittel zum Zuführen von Rohstoffen zu dem zweiten Mischer bereitgestellt ist
- Aufbringen des zweiten Gipsbreis $S_2$, sodass die erste Zwischenschicht (112) des zweiten Gipsbreis gebildet wird
- Aufbringen des dritten Gipsbreis $S_3$, sodass die zweite Zwischenschicht (114) des dritten Gipsbreis gebildet wird
- Aufbringen von mindestens einem Teil des ersten Gipsbreis $S_1$ auf die erste und/oder die zweite Zwischenschicht (112, 114), sodass die Kernschicht (113) des ersten Gipsbreis zwischen der ersten und zweiten Zwischenschicht (112, 114) gebildet wird.

12. Verfahren nach einem der Ansprüche 9 bis 11, **dadurch gekennzeichnet, dass**

der erste und der zweite Gipsbrei $S_1$, $S_2$ in Bezug auf die Art und/oder Menge von Zusatzstoffen unterschiedlich sind und/oder
der erste und der dritte Gipsbrei $S_1$, $S_3$ in Bezug auf die Art und/oder Menge von Zusatzstoffen unterschiedlich sind und/oder
der erste und der gemeinsame Gipsbrei nach Anspruch 11 in Bezug auf die Art und/oder Menge von Zusatzstoffen unterschiedlich sind und/oder
Methylcellulose zugegeben wird, gegebenenfalls zu dem ersten Gipsbrei und/oder dem zweiten Gipsbrei und/oder dem dritten Gipsbrei und/oder dem gemeinsamen Gipsbrei nach Anspruch 11, vorzugsweise zu der ersten und/oder der zweiten Außenschicht und/oder zu einer Zwischenschicht zwischen einer Gipsschicht und der ersten und/oder der zweiten Außenschicht.

13. Verfahren nach einem der Ansprüche 9 bis 12, **dadurch gekennzeichnet, dass**

der zweite Gipsbrei $S_2$ auf ein erstes Trägermittel und/oder eine erste Beschichtungsschicht, insbesondere ein erstes Papier (18), vorzugsweise vor einem Verbinden der unteren Schicht und der Kernschicht, aufgebracht wird und/oder
der dritte Gipsbrei $S_3$ auf ein zweites Trägermittel und/oder eine zweite Beschichtungsschicht, insbesondere ein zweites Papier, vorzugsweise vor einem Verbinden der ersten und der zweiten Zwischenschicht und der Kernschicht, aufgebracht wird.

14. Verfahren nach einem der Ansprüche 9 bis 13, **dadurch gekennzeichnet, dass**
der zweite und/oder dritte Gipsbrei $S_2$, $S_3$ und/oder der gemeinsame Gipsbrei nach Anspruch 11 schneller als der erste Gipsbrei $S_1$ härtet.

**15.** Verfahren nach einem der Ansprüche 9 bis 14, **dadurch gekennzeichnet, dass**

die Dicke der ersten und/oder der zweiten Zwischenschicht gleich oder größer als 0,5 mm ist und/oder ein Bereich der Längskanten der Gipskartonplatte eine höhere Menge des zweiten und/oder des dritten Gipsbreis $S_2$, $S_3$ und/oder des gemeinsamen Gipsbreis nach Anspruch 11 beinhaltet.

**Revendications**

**1.** Plaque de plâtre, comprenant une première couche externe, de préférence une couche de papier (111), une première couche intermédiaire (112) formée par une deuxième pâte de plâtre $S_2$, une couche centrale (113) formée par une première pâte de plâtre $S_1$, une seconde couche intermédiaire (114) formée par une troisième pâte de plâtre $S_3$ et une seconde couche externe, en particulier une couche de papier (115),

dans laquelle la première couche intermédiaire (112) est agencée entre la première couche externe (111) et la couche centrale (113), et la seconde couche intermédiaire (114) est agencée entre la seconde couche externe (115) et la couche centrale (113), dans laquelle les couches intermédiaires (112, 114) ont une épaisseur, au moins sensiblement, constante de 0,1 mm à 3 mm, de préférence de 0,2 mm à 1 mm,
dans laquelle la première pâte de plâtre comprend au moins 80 % en poids de toutes les pâtes de plâtre $S_1$, $S_2$ et $S_3$ :

$$\frac{m_{S_1}}{m_{S_1} + m_{S_2} + m_{S_3}} \geq 80\ \%$$

**caractérisée en ce que**
la première pâte de plâtre est préparée et introduite avec un pourcentage d'eau en poids inférieur à celui de la deuxième $S_2$ et/ou de la troisième $S_3$ pâte de plâtre,
dans laquelle la pâte de plâtre $S_1$ est préparée et introduite avec un pourcentage d'eau qui est réduit de plus de 10 % en poids, en comparaison à la pâte de plâtre $S_2$ ou $S_3$.

**2.** Plaque de plâtre selon la revendication 1, **caractérisée en ce que** la pâte de plâtre $S_1$ est préparée et introduite avec un pourcentage d'eau qui est réduit de plus de 15 % en poids, en comparaison à la pâte de plâtre $S_2$ et/ou $S_3$.

**3.** Plaque de plâtre selon la revendication 1 ou 2, **caractérisée en ce que** la couche centrale (113), de préférence aussi la première (112) et/ou la seconde (114) couche intermédiaire est principalement ou exclusivement formée de gypse naturel ou de gypse de désulfuration et/ou
**caractérisée en ce que**

la couche centrale (113) est formée d'un mélange de gypse $\alpha$ et de gypse $\beta$,
dans laquelle le rapport gypse $\alpha$ à gypse $\beta$ est entre 1:4 et 4:1, de préférence 1:2 et 2:1, en particulier de 1:1.

**4.** Plaque de plâtre selon l'une des revendications 1 à 3, **caractérisée en ce que** la couche centrale (113) a, dans son état sec, une densité identique ou similaire en comparaison à celle de la première (112) et/ou de la seconde (114) couche intermédiaire, dans leur état sec,
dans laquelle une différence de densité entre les couches (112, 113, 114) est de préférence inférieure à 20 %.

**5.** Plaque de plâtre selon l'une des revendications 1 à 4, **caractérisée en ce que** la couche centrale (113) a, dans son état sec, une densité réduite en comparaison à celle des première et/ou seconde couches intermédiaires (112, 114), dans laquelle la densité de la couche centrale (113) est de préférence réduite d'au moins 20 %, de préférence en outre d'au moins 30 %, en comparaison à la première (112) et/ou à la seconde (114) couche intermédiaire.

**6.** Plaque de plâtre selon l'une des revendications 1 à 5, **caractérisée en ce que** les couches intermédiaires (112, 114) sont formées par la même pâte de plâtre $S_2$, $S_3$.

**7.** Plaque de plâtre selon l'une des revendications 1 à 6, **caractérisée en ce que** la couche centrale (113) est formée par une pâte de plâtre $S_1$ préparée dans un premier mélangeur (10), et les couches intermédiaires (112, 114) sont formées par une deuxième pâte de plâtre $S_2$ préparée dans un second mélangeur (12).

**8.** Plaque de plâtre selon l'une des revendications 1 à 7, **caractérisée en ce que** la pâte de plâtre $S_1$ comprend un moyen de liquéfaction, en particulier du sulfonate de naphtalène, et/ou du sulfonate de lignine et/ou un autre liquéfacteur pour la formation de la couche centrale.

**9.** Procédé de production d'une plaque de plâtre, de préférence selon l'une des revendications 1 à 8, dans lequel la plaque de plâtre comporte une première couche externe, en particulier une couche de papier (111), une première couche intermédiaire (112), formée par une deuxième pâte de plâtre $S_2$, une couche centrale (113) formée par une première pâte de plâtre $S_1$, une seconde couche intermédiaire (114) formée par une troisième pâte de plâtre $S_3$, et une seconde couche externe, en particulier une couche de papier (115) comprenant les étapes :

- dépôt de la deuxième pâte de plâtre $S_2$ sur la première couche externe (111) pour la formation de la première couche intermédiaire (112),
- dépôt de la première pâte de plâtre $S_1$ sur la première couche intermédiaire (112) pour la formation de la couche centrale (113),
- dépôt de la troisième pâte de plâtre $S_3$ sur la couche centrale (113) ou la seconde couche externe (115) sous la formation de la seconde couche intermédiaire (114) et
- soit recouvrement de la troisième pâte de plâtre $S_3$ par la seconde couche externe (115) soit dépôt conjoint de la seconde couche externe (115) avec la troisième pâte de plâtre $S_3$ sur la couche centrale (113) et **caractérisé par**
- le lissage de la plaque de plâtre multicouche à l'aide d'un dispositif de lissage, par exemple une barre de lissage, dans lequel la pâte de plâtre $S_1$ est préparée et introduite avec un pourcentage d'eau en poids inférieur à celui des pâtes de plâtre $S_2$ et $S_3$, dans lequel le pourcentage d'eau en poids de la pâte de plâtre $S_1$ est réduit d'au moins 10 %, de préférence d'au moins 15 %, en comparaison au pourcentage d'eau en poids de la pâte de plâtre $S_2$ et/ou $S_3$.

**10.** Procédé selon la revendication 9, **caractérisé en ce que** la plaque de plâtre alimente une étuve de séchage après la prise des pâtes de plâtre $S_1$, $S_2$, $S_3$, en particulier après une formation en plaques individuelles,

dans lequel la plaque de plâtre alimente un processus de séchage avec une courbe de température asymétrique au cours du temps, dans lequel les températures dans la première moitié du processus de séchage sont fixées plus élevées que les températures dans la seconde moitié du processus de séchage, de préférence dans lequel la température moyenne dans la première moitié du processus de séchage est d'au moins 30 K au-dessus de la température moyenne dans la seconde moitié du processus de séchage.

**11.** Procédé selon la revendication 9 ou 10 comprenant les étapes de :

- fourniture de la première pâte de plâtre $S_1$ d'un type particulier de gypse, en particulier de gypse de désulfuration ou de gypse naturel ou de gypse de titane, par l'utilisation d'un premier mélangeur (10) de préférence dans lequel un premier moyen d'alimentation est prévu pour alimenter le premier mélangeur en matières premières,
- fourniture de la deuxième et de la troisième pâte de plâtre $S_2$, $S_3$ en tant que parties d'une pâte commune du type particulier de gypse par l'utilisation d'un second mélangeur séparé, qui est de préférence espacé du second mélangeur, de préférence dans lequel un second moyen d'alimentation séparé est prévu pour alimenter le second mélangeur en matières premières
- dépôt de la deuxième pâte de plâtre $S_2$ de sorte que la première couche intermédiaire (112) de la deuxième pâte de plâtre est formée
- dépôt de la troisième pâte de plâtre $S_3$ de sorte que la seconde couche intermédiaire (114) de la troisième pâte de plâtre est formée
- dépôt d'au moins une partie de la première pâte de plâtre $S_1$ sur la première et/ou la seconde couche intermédiaire (112, 114) couche de sorte que la couche centrale (113) de la première pâte de plâtre est formée entre la première et la seconde couche intermédiaire (112, 114).

**12.** Procédé selon l'une des revendications 9 à 11, **caractérisé en ce que**

la première et la deuxième pâte de plâtre $S_1$, $S_2$ sont différentes en ce qui concerne la nature et/ou la quantité d'additifs et/ou
la première et la troisième pâte de plâtre $S_1$, $S_3$ sont différentes en ce qui concerne la nature et/ou la quantité d'additifs et/ou
la première pâte de plâtre et la pâte de plâtre commune de la revendication 11 sont différentes en ce qui concerne la nature et/ou la quantité d'additifs et/ou de la méthylcellulose est ajoutée, facultativement à la première pâte de plâtre et/ou à la deuxième pâte de plâtre et/ou à la troisième pâte de plâtre et/ou à la pâte de plâtre commune de la revendication 11, de préférence à la première et/ou à la seconde couche externe, et/ou à une couche intermédiaire entre une couche de gypse et les première et/ou seconde couches externes.

13. Procédé selon l'une des revendications 9 à 12, **caractérisé en ce que**

la deuxième pâte de plâtre $S_2$ est déposée sur un premier moyen de support et/ou une première couche de revêtement, en particulier un premier papier (18), de préférence avant une jonction de la couche inférieure et de la couche centrale, et/ou
la troisième pâte de plâtre $S_3$ est déposée sur un second moyen de support et/ou une seconde couche de revêtement, en particulier un second papier, de préférence avant une jonction des première et seconde couches intermédiaires et de la couche centrale.

14. Procédé selon l'une des revendications 9 à 13, **caractérisé en ce que**
la deuxième et/ou la troisième pâte de plâtre $S_2$, $S_3$ et/ou la pâte de plâtre commune de la revendication 11 durcissent plus rapidement que la première pâte de plâtre $S_1$.

15. Procédé selon l'une des revendications 9 à 14, **caractérisé en ce que**
l'épaisseur de la première et/ou de la seconde couche intermédiaire est supérieure ou égale à 0,5 mm et/ou une zone des bords longitudinaux de la plaque de plâtre contient une quantité plus élevée de la deuxième et/ou de la troisième pâte de plâtre $S_2$, $S_3$ et/ou de la pâte de plâtre commune de la revendication 11.

Figure 1

thickness = 12.5 mm

Figure 2

drying zone 1  drying zone 2  drying zone 3  drying zone 4  drying zone 5  drying zone 6

running through drier in sec.

Legend:
- - - circulating air on /off conventional operation
——— circulating air on /off sandwich model
○ actual temperature conventional operation
□ actual temperature sandwich model

115    114

113

112    111

Figure 3

**EP 3 152 023 B1**

**Patent documents cited in the description**

- US 2940505 A
- EP 1389157 B1
- EP 0957212 B1
- EP 0634255 B1
- DE 2604483 A1
- DE 102004008184 A1
- FR 2959440 A1